## Europäisches Patentamt

(19) **European Patent Office**

**Office européen des brevets**

(11) Publication number: **0 259 021**
**B1**

(12) # EUROPEAN PATENT SPECIFICATION

(45) Date of publication of the patent specification: **12.12.90**

(51) Int. Cl.⁵: **E21D 20/02, E21D 21/00**

(21) Application number: **87306997.5**

(22) Date of filing: **07.08.87**

(54) Anchor bolt assembly.

(30) Priority: **11.08.86 US 895672**
**19.02.87 US 16395**

(43) Date of publication of application:
**09.03.88 Bulletin 88/10**

(45) Publication of the grant of the patent:
**12.12.90 Bulletin 90/50**

(84) Designated Contracting States:
**AT BE CH DE FR GB IT LI LU NL SE**

(56) References cited:
**FR-A- 1 209 949**
**US-A- 4 655 645**

(73) Proprietor: **E.I. DU PONT DE NEMOURS AND COMPANY,**
**1007 Market Street, Wilmington Delaware 19898(US)**

(72) Inventor: **Simmons, John Walter, Rt. 2, Box 234,**
**Martinsburg West Virginia 25401(US)**
Inventor: **Lillis, Jack Warner, Route 1 Box 2405,**
**Berryville Virginia 22611(US)**
Inventor: **Unger, Ronald Dwain, Route 4 2004 Maple**
**Wood Drive, Martinsburg West Virginia 25401(US)**

(74) Representative: **Woodcraft, David Charles et al,**
**BROOKES & MARTIN High Holborn House 52/54 High**
**Holborn, London, WC1V 6SE(GB)**

ACTORUM AG

## Description

### BACKGROUND OF THE INVENTION

#### Field of the Invention

This invention relates to an anchor bolt assembly. More particularly, the invention relates to a delayed tensioning bolt assembly useful in bore holes containing a settable bonding material. Such assemblies are useful in anchoring heavy machinery, in construction applications, and mine roof supports.

#### Description of Related Art

It is well known in the art of mine roof support and related anchoring systems to tension bolts by the use of the mechanical expansion system in combination with a settable bonding material. The popular bonding materials are provided in compartmented packages in which a resin and a catalyst for the resin are separated. Such a system is disclosed in U.S. Patent 4,280,943. Proper mixing of the catalyst and resin as well as final tensioning of the anchor bolts have been problems. Mixing of the resin and catalyst must take place within a very short period of time. The bolt assembly is inserted into the bore hole and rotated at high speeds to effect mixing.

In some systems which utilize mechanical expansion elements and settable bonding material, tensioning starts almost immediately after rotation of the bolt begins. A significant amount of tensioning takes place in such a system while the resin is in a softened state. In other systems tensioning is delayed until the resin begins to harden.

Typically a mine roof bolt is comprised of an elongated bolt, an anchoring device, a support means such as a roof plate and a hardened flat washer which is placed between the bolt head and the roof plate. The use of the hardened washer is addressed in ASTM Standard F432-83 and 30 CFR Part 75.

Anchor bolts having various profiled configurations have been used to promote mixing. Illustrative of one type of anchoring device is that shown in U.S. Patent 4 393 638. A tapered bolt having grooves and ridges having a spiral configuration is said to promote mixing of the resin and force it into the inner end of the bore. A bolt having a helical channel adjacent the end is shown in U.S. Patent 4 564 315. Such devices require machining or forming and are costly to manufacture.

Tensioning of the bolts has been achieved using various bolt and expansion shell configurations. Bolt and shell combinations of the type shown in U.S. Patent 4 413 930, depend on tensioning by advancing a camming plug which is threaded onto the bolt through an anchoring shell, Expanding fingers on the shell grip the bore wall holding it in place while the bolt is placed under tension. Such mechanical devices, although effective in tensioning the bolt, create highly concentrated loading on the walls of the bore hole which can crack the walls. FR-A 1 209 949 describes an anchor bolt assembly which is held in a hole in a body of concrete by injection of a mortar through apertures formed in a collar which surrounds the bolt. Tightening of the bolt is achieved by screwing up a nut which presses on the collar and a stiffly deformable and incompressible gasket.

In tensioning a bolt, a very significant portion of the energy used to tension the bolt can be dissipated at the bolt head because of friction between the support means and the surface surrounding the bore hole unless a means is provided to reduce the friction. This energy loss causes heating at the bolt head resulting in both a reduction in the level of tensioning that could otherwise be achieved and variability in tensioning from bolt to bolt.

### SUMMARY OF THE INVENTION

In accordance with this invention, there is provided an anchor bolt assembly for securing a bolt in a bore hole having a settable bonding material therein comprising in combination

(a) an elongated bolt having a head and support means on one end and a threaded portion at the other end,

(b) a nut threaded onto said bolt to permit entry into said bore hole and to permit passage of settable bonding material between said nut and the walls of said bore hole, and

(c) a rod having a point of attachment at one end to said nut and at least one other point of attachment along the length of said bolt at a location remote from said nut, said rod comprising means for mixing said settable bonding material during installation of the anchor bolt in the bore hole.

As a result of the present invention a simplified construction is achieved which provides a combination of excellent resin mixing and tensioning characteristics without the need for a camming plug or expanding fingers. To promote mixing, an essentially straight rod or wire is attached to a bolt having a head and supporting means at one end and a threaded portion which is adapted to receive a nut at the other end. The rod or wire is attached to the nut and to the bolt by weldments or other means which are of different strengths. The points of attachment are selected so that the rod is held in a straight or slightly spiralled configuration along the length of the bolt. In order to prevent the head of the bolt from being drawn into the bore hole during tensioning, the head of the bolt may have an enlarged shoulder or a roof plate, washers, or a combination thereof may be positioned on the bolt at the head end. When the anchor bolt assembly is forced into a bore hole containing a compartmented package of settable bonding material and the bolt is rotated, the bolt, rod and nut rotate as a unit mixing the resin and catalyst. As the resin cures, drag on the rod increases, and eventually the rod breaks or detaches at the weakest point. After the rod breaks free, the free length spirals about the bolt forcing the mixture of catalyst and resin towards the top of the bore hole. At this point, the nut and bolt are free to rotate relative to each other.

When the partially cured resin becomes strong enough to prevent the nut from turning, the bolt threads itself into the nut. The nut is pulled down into the partially cured resin, putting the resin in compression and forcing the resin to expand against the wall of the bore hole. The nut moves downward until the resin reaches a cure strength sufficient to stop its movement. This stalls the bolt's rotation. Installation is complete, and the bolt is in tension.

In a preferred embodiment, the bolt is provided with support means which functions as a thrust bearing when the bolt is fully inserted in the bore hole. The support means may include a combination of members having abutting planar surfaces, for example two washers which rest on the shoulder on the bolt head. The configuration of the members should be selected to prevent the bolt head from being pulled into the bore hole as the bolt is tensioned and also to spread the pressure generated by bolt tensioning over a large area. At least two contiguous surfaces of the support members are coated with a latent lubricating material. The coating may vary in thickness from about 0.1 mm to about 2.0 mm depending on the material used. The thickness of the coating is not critical. Preferably the two contiguous surfaces are releasably adhered to each other by the lubricating material. As the bolt assembly rotates, heat develops within the support means due to friction between the bolt head and support means. As the temperature rises, the latent lubricating material is activated, melting and functioning as a lubricant. The support means now acts as a lubricated thrust bearing as the bolt is tensioned in the bore hole.

A preferred latent lubricating material is a hot-melt adhesive composition. An example is HM-908, sold by the H. B. Fuller Company, which melts at a temperature of about 150°C. Other latent lubricants which adhere well to the surface of the support members and are dry to the touch under normal storage and shipping conditions may be used. Such materials include commercially available products such as the H. B. Fuller Co. HM-2047, United Resin Products 80-7801 and 80-7923 hot melt adhesives as well as similar products which function as latent lubricants. The particular material selected will depend on such factors as the temperatures which develop during the mixing and tensioning steps, melting temperature of the latent lubricating material and the shipping and storage environment for the anchor bolt assembly. The latent lubricating material also functions as a protective coating preventing corrosion and other damage to the support members and assists in controlling contamination between the surfaces of the support members. In some applications the material may be applied to other surfaces of the bolt assembly such as the bolt threads and shaft. The material will function as a lubricant on those surfaces when the temperature rises due to friction.

## BRIEF DESCRIPTION OF THE DRAWINGS

FIG. 1 is a side elevation view partially in section of the anchor bolt assembly illustrating a nut positioned on the threaded end of an elongated bolt with an elongated rod attached to the nut and to the bolt with support means being the shoulder on the bolt head;

FIG. 2 is a view similar to FIG. 1 illustrating the assembly positioned in rock strata ready for final tensioning, the threaded end of the bolt being advanced into the nut, the rod detached from the bolt and coiled about the bolt and the support means urged into abutting relationship with the rock strata;

FIG. 3 is a top plan view of the nut for the bolt showing a cutaway portion of the shoulder of the nut;

Fig. 4 is a fragmentary side elevation view, partially in section of an anchor bolt assembly showing the head of the bolt and the support means including a roof plate and two washers resting on the shoulder of the bolt head.

## DETAILED DESCRIPTION

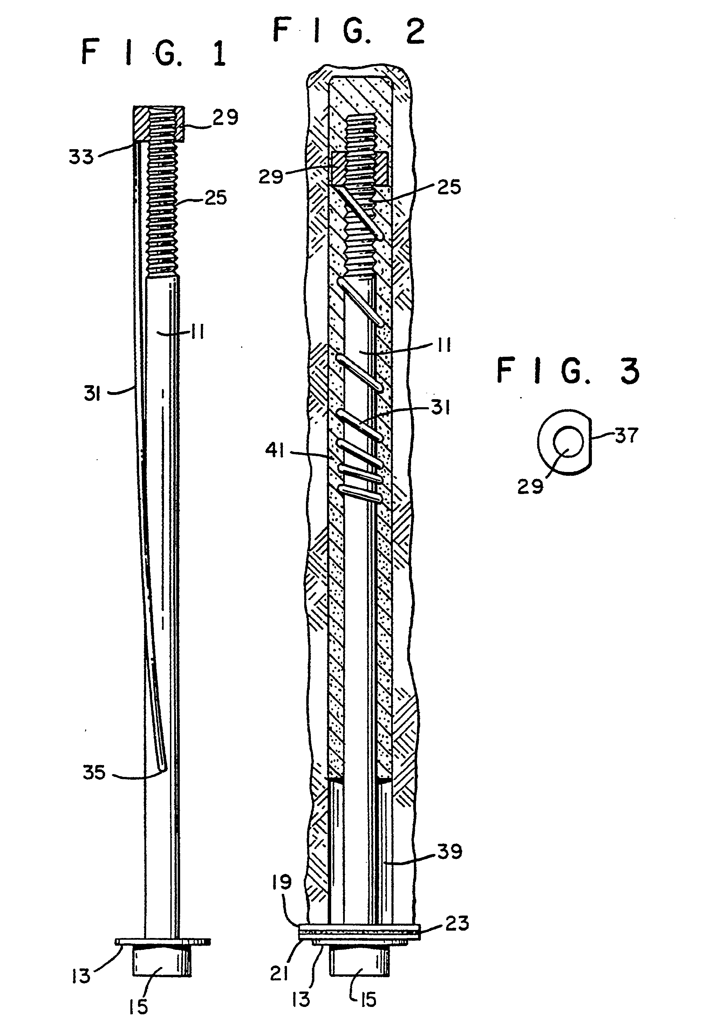

The anchor bolt assembly of the present invention includes an elongated bolt 11 having a flange 13 and head 15 on one end. The opposite end of bolt 11 has a threaded portion 25. The threaded portion 25 is adapted to receive nut 29 which has a flat face 37. As shown in Fig. 1, an elongated rod 31 is attached to nut 29 at point 33 and is attached to bolt 11 at a second point of attachment 35. Flange 13 on bolt 11 functions as a support means.

The length of rod 31 can be longer or shorter as desired depending on the amount of bonding material that is present in the bore hole.

Rod 31 must be attached to nut 29 and to one point along the length of bolt 11 remote from nut 29. It may, be attached at other points on bolt 11 if desired.

FIG. 2 illustrates an anchor bolt assembly positioned within bore hole 39. The assembly which includes washers 19 and 21 has been inserted with the threaded end portion 25 first entering the bore hole which contains a settable bonding material 41 such as that disclosed in U.S. Patent 4 280 943. When fully, inserted, the assembly is rotated rapidly, e.g., at from about 300 to 600 revolutions per minute, for about 5 to 10 seconds. During that period heat builds up within the support means due to friction and coating 23 begins to melt. After pausing a few seconds, e.g. 5 to 25 seconds, rotation of bolt 11 is resumed. With continued rotation of bolt 11, heat within the support means melts the latent lubricating material 23 washers 21 and 23 function as a lubricated thrust bearing until such time as the lubricant is forced from between the abutting surfaces of the two washers. Bolt 11, rod 31 and nut 29 rotate as a unit mixing the setting bonding material 41. As the cure of the bonding material 41 proceeds, draft on rod 31 increases, breaking it away from point of attachment 35. Rod 31 is then free to coil about bolt 11 forcing the bonding material toward the top of the bore hole. As the bonding material sets, bolt 11 begins to thread through nut 29 as the nut becomes partially frozen in the bonding material 41. Threaded portion 25 of bolt 11, which is preferably coated with a release agent, not shown, which prevents the curing resin from bonding nut 29 to the threads, causes nut 29 to be pulled down into the bonding material, putting the resin into compression and forcing the material to expand against the walls of bore hole 39. The release agent may be a lubricating material which may be applied as a coating by immersing the threaded end 25 of bolt 11 with the nut 29 in place into a hot melt material.

Tensioning of bolt 11 proceeds until the bolt and nut 29 are finally frozen in the borehole with washers 19 and 21 pressed together providing a unitary structure which uniformly spreads the pressure generated by bolt tensioning over a large area adjacent the mouth of the bore hole.

In another embodiment, not shown, rod 31 can be intentionally weakened at a point intermediate points of attachment 33 and 35. As bonding material 41 starts to cure, rod 31 breaks at the weakened point, leaving two free ends. The two sections of the rod are free to coil about the bolt as it is rotated and put under tension.

In still another embodiment, not shown, rod 31 can break away from point of attachment 33 and coil downward toward head 15. Rod 31 can, of course, be attached to bolt 11 and nut 29 by means other than welding so long as the rod is releasable at one point of attachment during installation of the anchor bolt assembly.

As shown in FIG. 3, nut 29 has a cutaway shoulder. The shape and diameter of nut 29 is selected to permit entry of the nut into a bore hole and to permit passage of a settable bonding material between the nut and the walls of the bore hole. If the support means is to be positioned onto bolt 11 after nut 29 is threaded onto bolt 11, the opening in the support means must be large enough to pass over nut 29.

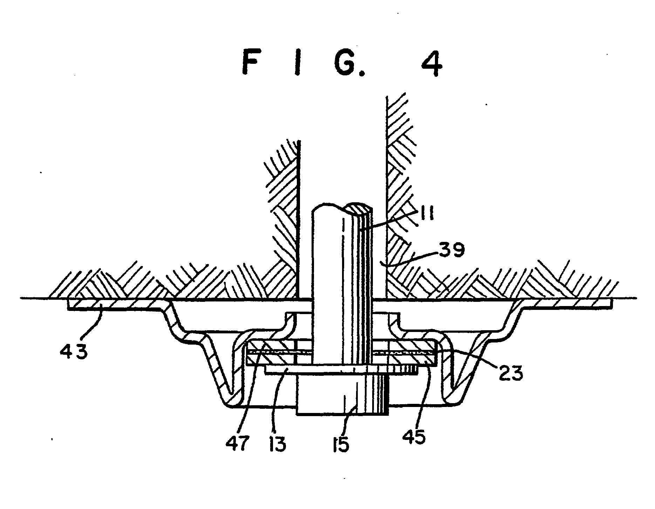

FIG. 4 shows an alternative embodiment of support means for distributing pressure in a larger area around the bore hole when tensioning the anchor bolt. A roof plate 43 is used in combination with two washers 45 and 47 which are releasably adhered to each other by a coating of latent lubricating material 23.

Comparative tests were made in the laboratory to measure frictional loss using a support means of this invention similar to that shown in FIG. 4. The bolt, nut and rod assembly was similar to that shown in FIG. 1 with the weldments of a strength to permit the rod to selectively release from its point of attachment on the bolt. The settable bonding material was Du Pont's "Fasloc" rock bolt bonding material contained in a compartmented package containing resin and a catalyst. For one of the tests, support means included a standard, uncoated flat washer as described in ASTM Standard F432-83. In other tests in which a latent lubricating material was present, two standard zinc-plated steel washers were used. All washers had an outside diameter of 5 centimeters and an inside diameter of 1.9 centimeters. The latent lubricating material used was H. B. Fuller Co., HM-908 hot melt adhesive. The adhesive was heated to about 175°C and the washers of the support means were heated to about 82°C prior to coating. Contiguous surfaces of the washers were coated, and washers were then pressed together for adherence to each other. In carrying out the tests, the washers were placed onto an elongated bolt having a 1.43 centimeter diameter and a length of 1.22 meters. For each test, a mine roof plate of the type shown in FIG. 4 was placed on the bolt on top of the washers and then a round steel backing plate having a 15 centimeter diameter and 1.25 centimeter thickness with a 2.5 centimeter hole in the middle was placed on top of the mine roof plate. The end of the bolt opposite the head was inserted into a steel test bore of 2.54 centimeter diameter to simulate a bore hole. The entire assembly was then placed in a machine having a vice to hold the test bore vertical and rigid, a hydraulic motor to drive a chuck to engage the bolt head and rotate it, and a thrust mechanism for pushing the bolt into the test bore. The thrust was variable from 0 to 34,700 newtons, RPM of the motor was variable from 0 to 500, and the torque developed by the motor was variable from 0 to 540 newton-meters. The parameters were measured by sensors and recorded on a strip chart recorder. Tensioning of the bolt was simulated by applying a thrust force against the head of the bolt which in turn transmitted the force to the washers, mine roof plate, backing plate, and test bore. The bolt was rotated at 450 RPM, and the torque required for rotation was measured and compared for three different values of simulated tension. (The torque required for rotation represents an energy loss which is experienced when bolts are actually installed and tensioned). In the first test conducted using a single standard hardened washer and roof plate of the type described in ASTM F432-83, with no latent lubricating material being used, the energy dissipated at 13,300 newtons bolt tension was 86 newton-meters; at 17,800 newtons, it was 140 newton-meters, and at 31,100 newtons it was 300 newton-meters. For a given bolt tension the loss increased with time as the anchor bolt assembly was rotated. The test was repeated substituting two standard zinc-plated steel washers for the single hardened washer. No latent lubricant was used. Losses recorded were 76 newton-meters at 13,300 newtons of bolt tension, 140 newton-meters at 17,800 newtons of tension, and 300 newton-meters at 31,100 newtons of tension. Again the losses increased with time as the anchor bolt assembly was rotated. The test was again repeated substituting the support system of this invention shown in FIG. 4 which included the latent lubricating material. The energy loss remained constant at 16 newton-meters up to 17,800 newtons of bolt tension and was no greater 32 newton-meters at 31,100 newtons of tension.

Test installations of the anchor bolt assembly were made in a mine using the support means of this invention shown in FIG. 4. The anchor bolt assembly was the assembly shown in FIG 1 modified to include the roof plate and washers shown in FIG. 4. A rubber compression pad was placed on the bolt adjacent to the roof plate to measure bolt tension. The latent lubricating material was H. B. Fuller Co.'s HM-908 hot-melt adhesive deposited on zinc-plated steel washers having outside diameters of 5 centimeters, inside diameters of 1.9 centimeters, and thicknesses of 4 millimeters. All bolts had a length of 1.22 meters and a diameter of 1.43 centimeters. The elongated rod attached to the bolt assembly had a length of 30.5 centimeters and a diameter of 3.2 millimeters. One end of the rod was welded to the nut, and the other end was welded to the bolt. The welds were of such strength as a to permit selective detachment of the rod from its point of attachment to the bolt. The settable bonding material was Du Pont "Fasloc" rock bolt bonding material contained in a compartmented package containing resin and a catalyst. The package was nominal 2.3 centimeters in diameter and 40 centimeters long. Mixing time for the resin and catalyst was typically 5-8 seconds. Gel time was typically 15-20 seconds. Bore holes having a diameter of 2.54 centimeters were drilled to a depth of 1.22 meters in the mine roof. In each test, a package of bonding material was inserted into the bore hole. The anchor bolt assembly was inserted into the bore hole piercing the package containing the bonding material. Mixing of the resin and catalyst was effected by rotating the bolt assembly at about 560 RPM for 5-8 seconds. Mixing was then stopped for 15-20 seconds to allow the bonding material to gel. The bolt was again rotated until the machine stalled out. A roof bolt compression pad and a compression pad gauge manufactured by the Goodyear Rubber Co., St. Mary's, Ohio, were used to measure bolt tension. Tension was determined by measuring the increase in circumference of the Goodyear compression pad using the gauge which is calibrated to indicate bolt tension. The machine used to drill the bore holes and insert and tension the bolts was a standard mine roof bolting machine capable of drilling holes and installing bolts vertically. The machine was set to deliver a maximum torque for tensioning the bolts of 340 newton-meters. Use of the support means of this invention doubled the bolt tensions as compared to tensions previously achieved using a single standard hardened washer and roof plate. Of the five bolts tested, the tensions were 45,400; 52,000; 56,000; 51,600; and 56,900 newtons.

Various materials of construction may be used in the manufacture of the anchor bolt assembly of this invention. Where high strength applications such as those used in mine roofs are involved, steel is a preferred material. In anchoring machinery and in other applications which do not require such high strength, various plastic materials are available. Settable bonding materials include polyesters, epoxys, other known synthetic resins and inorganic grouts which are commercially available. A particularly desirable material is sold under the trademark Fasloc® by E. I. du Pont de Nemours and Company.

## Claims

1. An anchor bolt assembly for securing a bolt in a bore hole having a settable bonding material (41) therein comprising in combination

(a) an elongated bolt (11) having a head (15) and support means (13) on one end and a threaded portion (25) at the other end,

(b) a nut (29) threaded onto said bolt to permit entry into said bore hole and to permit passage of settable bonding material between said nut and the walls of said bore hole, and

(c) a rod (31) having a point of attachment (33) at one end to said nut and at least one ether point of attachment (35) along the length of said bolt at a location remote from said nut, said rod comprising means for mixing said settable bonding material during installation of the anchor bolt in the bore hole.

2. An anchor bolt according to claim 1 wherein said support means comprises first and second support members (19, 21) positioned on said bolt, said first member having a planar surface adjacent to the area surrounding the mouth of the bore hole and an opposing surface releasably adhered to a contiguous surface of said second member by a latent lubricating material (23), said lubricating material becoming an active lubricant in response to heat generated when said bolt is rotated in said bore hole.

3. An anchor bolt assembly according to claim 2 wherein said latent lubricating material is a hot-melt adhesive.

4. An anchor bolt according to any one of the preceding claims wherein said rod is essentially straight having one end welded to the nut and the other end welded to the bolt, said rod being selectively releasable from its point of attachment on said bolt when subjected to drag of the settable bonding material as said bolt is rotated in said bore hole.

5. An anchor bolt of claim 4 wherein said rod selectively releases from its point of attachment to the bolt thereby providing a loose end that is free to coil about said bolt as the bolt is rotated.

6. An anchor bolt assembly according to any one of claims 1 to 3, wherein said rod (31) has a point of attachment at one end (33) to said nut and another point of attachment along the length of said bolt at a point (35) remote from said nut, said bolt being selectively releasable from its point of attachment on said bolt when subjected to drag of the settable bonding material as said bolt is rotated in said bore hole.

7. An anchor bolt assembly according to claim 6 wherein the ends of said rod are attached by weldments.

8. A method of securing an anchor bolt assembly in a bore hole using a settable bonding material said method comprising introducing a settable bonding material into a bore hole containing an elongated bolt having a head at one end and a threaded portion at the other end with a nut threaded thereon, and shaped to permit entry into said bore hole and to permit passage of settable bonding material between said nut and the walls and having means for mixing said bonding material in said hole comprising a rod having one end attached to said nut and the other end attached to said bolt, and, mixing the settable bonding material by rotating the bolt nut and rod assembly.

9. A method according to claim 8 wherein said bolt is rotated until increasing drag on the rod resulting from curing of the resin causes its detachment from the bolt thereby providing a loose end that is free to coil around said bolt as the bolt is rotated.

10. A method according to claim 9 wherein the loose end of the rod is spiralled about said bolt in a direction to force said bonding material towards the nut as the assembly is rotated.

11. A method according to claim 9 or 10 wherein the rod continues to be rotated after detachment of the rod thus causing the nut to be threaded onto the bolt and compressing the resin against the walls of the bore hole and placing the bolt under tension until further curing of the resin prevents movement of the nut.

12. A method according to any one of claims 8 to 11 wherein the surface of the bolt is coated with a lubricating or release material.

**Revendications**

1. Ensemble de boulon d'ancrage pour fixer une vis dans un trou comportant intérieurement un matériau de liaison durcissable (41), comprenant en combinaison:

(a) une vis allongée (11) ayant une tête (15) et des moyens de support (13) à une extrémité et, à son autre extrémité, une partie filetée,

(b) un écrou (29) vissé sur la vis de façon à permettre son entrée dans le trou ainsi que le passage d'un matériau de liaison durcissable entre l'écrou et les parois du trou, et

(c) une tige (31) ayant un point de fixation (33) à une extrémité sur l'écrou et au moins un autre point de fixation (35) sur la longueur de la vis, en un point éloigné de l'écrou, cette tige constituant des moyens pour mélanger le matériau de liaison durcissable pendant la pose du boulon d'ancrage dans le trou.

2. Ensemble de boulon d'ancrage suivant la revendication 1, dans lequel le support comprend un premier et un second organes de support (19, 21) disposés sur la vis, le premier organe ayant une surface plane adjacente à la surface entourant l'embouchure du trou et une surface opposée collée de façon séparable à une surface contiguë dudit second organe par un matériau qui est un lubrifiant latent (23), ce matériau lubrifiant devenant un lubrifiant actif en réponse à la chaleur engendrée lorsque la vis est entraînée en rotation dans le trou.

3. Ensemble de boulon d'ancrage suivant la revendication 2, dans lequel ledit matériau lubrifiant latent est un adhésif thermo-fusible.

4. Ensemble de boulon d'ancrage suivant l'une quelconque des revendications précédentes, dans lequel la tige est essentiellement rectiligne, ayant une extrémité soudée à l'écrou et l'autre extrémité soudée sur la vis, cette tige étant libérable sélectivement de son point de fixation sur la vis lorsqu'elle est soumise à une traction par le matériau de liaison durcissable du fait que la vis est entraînée en rotation dans le trou.

5. Ensemble de boulon d'ancrage suivant la revendication 4, dans lequel la tige est libérée sélectivement de son point de fixation sur la vis, formant ainsi une extrémité libre qui est apte à s'enrouler hélicoïdalement autour de la vis lorsque celle-ci est entraînée en rotation.

6. Ensemble de boulon d'ancrage suivant l'une quelconque des revendications 1 à 3, dans lequel la tige (31) comporte un point de fixation à une extrémité (33) sur l'écrou et un autre point de fixation sur la longueur de la vis en un point (35) éloigné de l'écrou, la tige étant sélectivement libérable de son point de fixation sur la vis lorsqu'elle est soumise à une traction exercée par le matériau de liaison durcissable lorsque la vis est entraînée en rotation dans le trou.

7. Ensemble de boulon d'ancrage suivant la revendication 6, dans lequel les extrémités de la tige sont fixées par soudage.

8. Procédé de fixation d'un ensemble de boulon d'ancrage dans un trou en utilisant un matériau de liaison durcissable, ce procédé comprenant l'introduction, dans un trou contenant un matériau de liaison durcissable, une vis allongée ayant une tête à une extrémité et une portion filetée à son autre extrémité, avec un écrou vissé sur cette dernière, et conformée de façon à permettre sa pénétration dans le trou ainsi que le passage du matériau de liaison durcissable entre l'écrou et les parois du trou, et comportant des moyens pour fixer le matériau de liaison dans le trou, comprenant une tige ayant une extrémité fixée sur l'écrou et son autre extrémité fixée sur la vis, et le mélange du matériau de liaison durcissable par une rotation de l'ensemble formé de la vis de l'écrou et de la tige.

9. Procédé suivant la revendication 8, dans lequel la vis est entraînée en rotation jusqu'à ce qu'une traction accrue sur la tige, résultant du durcissement de la résine provoque sa séparation de la vis, réalisant ainsi une extrémité libre qui est apte à s'enrouler hélicoïdalement autour de la vis pendant que celui-ci est entraîné en rotation.

10. Procédé suivant la revendication 9, dans lequel l'extrémité libre de la tige est enroulée en spirale autour de la vis dans une direction apte à forcer le matériau de liaison vers l'écrou lorsque l'ensemble est entraîné en rotation.

11. Procédé suivant la revendication 9 ou 10, dans lequel la tige continue d'être entraînée en rotation après sa séparation, forçant ainsi l'écrou à se visser sur la vis et comprimant la résine contre les parois du trou et plaçant la tige sous tension jusqu'à ce que la continuation du durcissement de la résine empêche le déplacement de l'écrou.

12. Procédé suivant l'une quelconque des revendications 8 à 11, dans lequel la surface de la vis est revêtue d'un lubrifiant ou d'un agent de séparation.

**Patentansprüche**

1. Ankerbolzenanordnung zum Festlegen eines Bolzens in einem Bohrloch, das ein abbindbares Haftmaterial (41) darin enthält, und welche folgende Kombination aufweist:

(a) einen länglichen Bolzen (11), der einen Kopf (15) und eine Stützeinrichtung (13) an einem Ende und einen Gewindeabschnitt (25) am anderen Ende hat,

(b) eine Mutter (29), die auf den Bolzen geschraubt ist, um einen Eintritt in das Bohrloch und den Durchgang des abbindbaren Haftmaterials zwischen der Mutter und den Wänden des Bohrlochs gestattet, und

(c) einen Stab (31), der eine Befestigungsstelle (33) mit der Mutter an einem Ende und wenigstens eine weitere Befestigungsstelle (35) längs der Länge des Bolzens an einer von der Mutter entfernt liegenden Stelle hat, wobei der Stab eine Einrichtung zum Mischen des abbindbaren Haftmaterials während des Einbaus des Ankerbolzens in das Bohrloch aufweist.

2. Ankerbolzen nach Anspruch 1, bei dem die Stützeinrichtung erste und zweite Stützteile (19, 21) aufweist, die auf dem Bolzen angeordnet sind, das erste Teil eine planare Fläche in der Nähe des die Mündungsöffnung des Bohrlochs umgebenden Bereichs und eine gegenüberliegende Fläche hat, die lösbar an einer angrenzenden Fläche des zweiten Teils mittels eines latenten Schmiermittels (23) haftet, und bei dem das Schmiermaterial in Abhängigkeit von der beim Drehen des Bolzens in dem Bohrloch erzeugten Wärme ein aktives Schmiermittel wird.

3. Ankerbolzenanordnung nach Anspruch 2, bei der das latente Schmiermaterial ein Schmelzkleber ist.

4. Ankerbolzenanordnung nach einem der vorangehenden Ansprüche, bei der der Stab im wesentlichen gerade ist, ein Ende hat, das an der Mutter angeschweißt ist, und ein anderes Ende hat, das an dem Bolzen angeschweißt ist, der Stab selektiv von der Befestigungsstelle am Bolzen lösbar ist, wenn eine Widerstandskraft von dem abbindbaren Haftmaterial beim Drehen des Bolzens in dem Bohrloch einwirkt.

5. Ankerbolzen nach Anspruch 4, bei dem der Stab von der Befestigungsstelle an dem Bolzen selektiv lösbar ist, wodurch man ein loses Ende erhält, das sich frei um den Bolzen beim Drehen des Bolzens wickeln läßt.

6. Ankerbolzenanordnung nach einem der Ansprüche 1 bis 3, bei der der Stab (31) eine Befestigungsstelle mit der Mutter an einem Ende (33) und eine weitere Befestigungsstelle längs der Länge des Bolzens an einer von der Mutter entfernt liegenden Stelle (35) hat, und bei der der Bolzen selektiv von der Befestigungsstelle am Bolzen lösbar ist, wenn beim Drehen des Bolzens in dem Bohrloch eine Widerstandskraft von dem abbindbaren Haftmaterial einwirkt.

7. Ankerbolzenanordnung nach Anspruch 6, bei der die Enden des Stabs mittels Schweißkonstruktionen angebracht sind.

8. Verfahren zum Festlegen einer Ankerbolzenanordnung in einem Bohrloch unter Verwendung eines abbindbaren Haftmaterials, wobei das Verfahren das Einführen eines abbindbaren Haftmaterials in ein Bohrloch aufweist, das einen länglichen Bolzen enthält, der einen Kopf an einem Ende und einen Gewindeabschnitt am anderen Ende hat, auf den eine Mutter aufgeschraubt ist, und der derart geformt ist, daß der Eintritt in das Bohrloch und der Durchgang des abbindbaren Haftmaterials zwischen der Mutter und den Wänden möglich sind, und der eine Einrichtung zum Mischen des Haftmaterials in dem Loch hat, welche einen Stab aufweist, dessen eines Ende an der Mutter und dessen anderes Ende an dem Bolzen angebracht ist, und wobei das Verfahren das Vermischen des abbindbaren Haftmaterials durch Drehung der Bolzenmutter- und Stabanordnung aufweist.

9. Verfahren nach Anspruch 8, bei dem der Bolzen gedreht wird, bis ein erhöhter Widerstand auf den Stab infolge des Aushärtens des Harzes ein Lösen von dem Bolzen bewirkt, wodurch man ein loses Ende erhält, das sich frei um den Bolzen beim Drehen des Bolzens wickeln läßt.

10. Verfahren nach Anspruch 9, bei dem das lose Ende des Stabs spiralförmig um den Bolzen in eine Richtung angeordnet ist, um das Haftmaterial in Richtung der Nut zu zwingen, wenn die Anordnung gedreht wird.

11. Verfahren nach Anspruch 9 oder 10, bei dem der Stab nach dem Lösen des Stabs fortgesetzt gedreht wird, wodurch bewirkt wird, daß die Mutter auf den Bolzen geschraubt und der Harz gegen die Wände des Bohrlochs komprimiert wird, und bei dem der Bolzen unter Spannung gesetzt wird, bis eine weitere Aushärtung des Harzes eine Bewegung der Mutter verhindert.

12. Verfahren nach einem der Ansprüche 8 bis 11, bei dem die Oberfläche des Bolzens mit einem Schmier- oder Trennmittel beschichtet ist.

F I G. 1

F I G. 2

F I G. 3

# F I G. 4